# EUROPEAN PATENT SPECIFICATION

(11) **EP 3 417 020 B1**
(45) Date of publication and mention of the grant of the patent: **08.04.2020**
(21) Application number: 17706869.9
(22) Date of filing: 17.02.2017
(51) Int. Cl.: C09D 11/101, C09D 11/30

(54) **PRINTING INK**
DRUCKTINTE
ENCRE D'IMPRESSION

(30) Priority: 18.02.2016 GB 201602874; 14.09.2016 GB 201615631
(43) Date of publication of application: 26.12.2018
(73) Proprietor: Fujifilm Speciality Ink Systems Limited, Broadstairs, Kent CT10 2LE (GB)
(72) Inventor: BAINES, Mikala, Broadstairs Kent CT10 2LE (GB); BURNS, Kevin, Broadtsairs Kent CT10 2LE (GB); NOUTARY, Carole, Broadstairs Kent CT10 2LE (GB)
(74) Representative: Elkington and Fife LLP
(86) International application number: PCT/GB2017/050418
(87) International publication number: WO 2017/141046

(56) References cited:
- EP-A1- 2 700 509
- EP-A1- 2 832 804
- WO-A1-2012/110815
- US-A- 5 275 646

## Description

The present invention relates to a printing ink and in particular to an inkjet ink for printing onto food packaging.

Inkjet printing is an attractive technique for printing onto a wide-range of substrates on account of its flexibility and ease of use. However, food packaging represents a particular challenge on account of the strict limitations on the properties of materials which come into contact with food, including indirect additives like packaging inks. Specific exclusions include volatile organic solvents and many monomers typically used in inkjet inks based on their odour and/or migration properties. Further, as original equipment manufacturers (OEMs) move towards developing labelling and flexible packaging printers which use high resolution and high speed printheads, there is an increasing need for low viscosity and ultra-low viscosity inkjet inks.

US 5,275,646 relates to an inkjet ink free of volatile solvents which comprises a colourant, a liquid phase consisting essentially of polymerisable monomers and a water-soluble polar conductive material dissolved in the liquid phase.

WO 2012/110815 is concerned with a method of multi-pass printing a colourless inkjet ink, wherein the colourless inkjet ink comprises at least 30% by weight of a monofunctional (meth)acrylate monomer, based on the total weight of the ink, and a photoinitiator.

There is therefore a need in the art for low viscosity and ultra-low viscosity inkjet inks which can be printed onto food packaging.

Accordingly, the present invention provides an inkjet ink comprising:
an α,β-unsaturated ether monomer in which the only radiation-curable functional groups present in the monomer are α,β-unsaturated ether groups;
a low-viscosity difunctional (meth)acrylate monomer in which the only radiation-curable functional groups present in the monomer are acrylate groups, wherein the low-viscosity difunctional (meth)acrylate monomer has a viscosity of 0.5 to 6.5 mPas at 25°C; and
a colouring agent;
wherein the ink contains less than 5% by weight of water and volatile organic solvents in total, and less than 3.0% by weight of mono- and difunctional monomers in total, other than the α,β-unsaturated ether monomer and the low-viscosity difunctional (meth)acrylate monomer, where the amounts by weight are based on the total weight of the ink, and
wherein the ink has a viscosity of less than 30 mPas at 25°C.

Thus, the present invention provides an ink which has low odour and low migration and so is suitable for food packaging applications, but has a suitably low viscosity for inkjet printing and cures to provide a flexible and resilient film.

The ink contains at least one α,β-unsaturated ether monomer, typically a vinyl ether. Such components are known in the art. They include at least one α,β-unsaturated ether functional group which can undergo polymerisation during the curing process. In the α,β-unsaturated ether monomer, the only radiation-curable functional groups present in the monomer are α,β-unsaturated ether groups. By "radiation-curable" is meant that the material polymerises or crosslinks when exposed to actinic radiation, commonly ultraviolet light, in the presence of a photoinitiator. These monomers contribute to the necessary low odour and low migration properties for food packaging applications.

α,β-Unsaturated ether monomers can polymerise by free-radical or cationic polymerisation. Examples include vinyl ethers such as triethylene glycol divinyl ether, diethylene glycol divinyl ether, 1,4-cyclohexanedimethanol divinyl ether and ethylene glycol monovinyl ether. Mixtures of α,β-unsaturated ether monomers may be used.

The α,β-unsaturated ether monomer preferably has a functionality of 1 to 6, more preferably 2 to 4.

The α,β-unsaturated ether monomer preferably has a viscosity of 0.5 to 6.5 mPas at 25°C, more preferably 2.0 to 5.0 mPas at 25°C. The viscosity of this component may be measured using a Brookfield viscometer fitted with a thermostatically controlled cup and spindle arrangement, such as a DV1 low-viscosity viscometer.

The α,β-unsaturated ether monomer preferably has a boiling point of 200 to 300°C, more preferably 225 to 275°C, at 1.013 hPa.

The α,β-unsaturated ether monomer is preferably present at 10-50% by weight, more preferably 20-40% by weight.

The ink also contains a low-viscosity difunctional (meth)acrylate monomer. Difunctional (meth)acrylate monomers are known in the art. They include two (meth)acrylate functional groups which can undergo polymerisation during the curing process. In the low-viscosity difunctional (meth)acrylate monomer, the only radiation-curable functional groups present in the monomer are acrylate groups. The term "radiation-curable" has the same meaning throughout as described hereinabove.

The low-viscosity difunctional (meth)acrylate monomer has a viscosity of 0.5 to 6.5 mPas at 25°C. The viscosity of this component may be measured using a Brookfield viscometer fitted with a thermostatically controlled cup and spindle arrangement, such as a DV1 low-viscosity viscometer. In a preferred embodiment, the low-viscosity difunctional (meth)acrylate monomer has a viscosity of 3.0 to 6.0 mPas at 25°C. The low-viscosity difunctional (meth)acrylate monomer contributes to the low viscosity of the inkjet ink.

The low-viscosity difunctional (meth)acrylate monomers contribute to the necessary low odour and low migration properties for food packaging applications. Previously, it was considered necessary to exclude mono- and di-functional monomers in inkjet inks for food packaging applications based on their odour and tendency to migrate (WO 2015/004489 and WO 2015/004488). However, it has surprisingly been found that certain difunctional monomers can be included in inkjet inks for food packaging applications, having low odour and low migration properties. In the present invention, this is achieved by using the low-viscosity difunctional (meth)acrylate monomer. The odour of a component is thought to be linked to its boiling point. For example, 1,6-hexanediol diacrylate (HDDA), a difunctional monomer commonly used in inkjet inks, has a boiling point of 98.82°C at 1.013 hPa and a moderate odour whereas the low-viscosity difunctional (meth)acrylate monomer has a boiling point of more than 150°C, preferably more than 180°C, at 1.013 hPa and a low odour. In a preferred embodiment, the low-viscosity difunctional (meth)acrylate monomer has a boiling point of less than 200°C at 1.013 hPa. The low-viscosity difunctional (meth)acrylate monomer is also sufficiently reactive and capable of crosslinking upon curing, resulting in low migration.

The low-viscosity difunctional (meth)acrylate monomer is preferably present at 10-70% by weight, more preferably 20-60% by weight.

In a preferred embodiment, the difunctional (meth)acrylate monomer is 3-methyl-1,5-pentanediyl diacrylate (MPDDA).

The ink may contain at least one tri- or higher functionality (meth)acrylate monomer. Such components are known in the art. They include at least three acrylate functional group which can undergo polymerisation during the curing process. In the tri- or higher functionality (meth)acrylate monomer, the only radiation-curable functional groups present in the monomer are acrylate groups. The term "radiation-curable" has the same meaning throughout as described hereinabove.

Tri- or higher functionality (meth)acrylate monomers can be tolerated because they cure rapidly and therefore their presence is minimised in the final film. Put another way, these monomers can provide the necessary low odour and low migration properties for food packaging applications. However, if tri- or higher functionality (meth)acrylate monomers are present in the ink, the nature and/or the quantity of these monomers must be controlled so that the viscosity of the ink is not adversely affected.

Suitable tri- or higher functionality (meth)acrylate monomers include acrylates such as trimethylolpropane triacrylate, pentaerythritol triacrylate, tri(propylene glycol) triacrylate, bis(pentaerythritol) hexaacrylate, ethoxylated trimethylolpropane triacrylate, and mixtures thereof. Suitable (meth)acrylate monomers also include esters of methacrylic acid (i.e. methacrylates), such as trimethylolpropane trimethacrylate. Mixtures of (meth)acrylates may also be used.

The tri- or higher functionality (meth)acrylate monomer preferably has a functionality of 3 to 6.

The term "(meth)acrylate" is intended herein to have its standard meaning, i.e. acrylate and/or methacrylate.

The tri- or higher functionality (meth)acrylate monomer is preferably present at 30-70% by weight, more preferably 40-60% by weight.

The monomers used in the present invention typically have a molecular weight of less than 600, more preferably less than 400.

The combination of the above-described α,β-unsaturated ether monomer and the low-viscosity difunctional (meth)acrylate monomer obviates the need for many other components commonly required for proper printing and curing properties. Thus, the ink of the present invention contains less than 10% by weight of mono- and di-functional monomers in total, other than the α,β-unsaturated ether monomer and the low-viscosity difunctional (meth)acrylate monomer. That is, apart from the α,β-unsaturated ether monomer and the low-viscosity difunctional (meth)acrylate monomer defined hereinabove, the total quantity of mono- and difunctional monomers is less than 10% by weight. The terms "monofunctional" and "difunctional" have their standard meanings, namely one or two radiation-curable functional groups, respectively, which can take part in the polymerisation or crosslinking reaction when the ink is exposed to actinic radiation, commonly ultraviolet light, in the presence of a photoinitiator. The ink contains less than 3.0% by weight, preferably less than 2.0%, and most preferably less than 1.0%, of mono- and difunctional monomers in total, other than the α,β-unsaturated ether monomer and the low-viscosity difunctional (meth)acrylate monomer.

Non-limiting examples of mono- and difunctional monomers whose presence is to be minimised are as follows: monofunctional (meth)acrylate monomers such as phenoxyethyl acrylate (PEA), cyclic TMP formal acrylate (CTFA), isobornyl acrylate (IBOA), tetrahydrofurfuryl acrylate (THFA), 2-(2-ethoxyethoxy)ethyl acrylate, octadecyl acrylate (ODA), tridecyl acrylate (TDA), isodecyl acrylate (IDA) and lauryl acrylate; difunctional (meth)acrylate monomers such as hexanediol diacrylate, polyethylene glycol diacrylate (for example tetraethylene glycol diacrylate), dipropylene glycol diacrylate, neopentyl glycol diacrylate, propoxylated neopentyl glycol diacrylate, hexanediol dimethacrylate, triethyleneglycol dimethacrylate, diethyleneglycol dimethacrylate, ethyleneglycol dimethacrylate and 1,4-butanediol dimethacrylate; and N-vinyl amides and N-(meth)acryloyl amines such as N-vinyl caprolactam (NVC), N-vinyl pyrrolidone (NVP) and N-acryloylmorpholine (ACMO).

The ink may also contain radiation-curable oligomers. Oligomers typically have a molecular weight of 400 to 7,000, more preferably the lower limit is 600 and more preferably the upper limit is 5,000. Molecular weights (number average) can be calculated if the structure of the oligomer is known or molecular weights can be measured using gel permeation chromatography using polystyrene standards. However, the ink preferably contains less than 10% by weight, more preferably less than 5% by weight, of radiation-curable oligomers.

The ink may also contain a passive (or "inert") thermoplastic resin. Passive resins are resins which do not enter into the curing process, i.e. the resin is free of functional groups which polymerise under the curing conditions to which the ink is exposed. In other words, the resin is not a radiation-curable material. The resin may be selected from epoxy, polyester, vinyl, ketone, nitrocellulose, phenoxy or acrylate resins, or a mixture thereof and is preferably a poly(methyl (meth)acrylate) resin. The resin has a weight-average molecular weight of 1,500-200,000, as determined by GPC with polystyrene standards as previously described hereinabove. However, the ink preferably contains less than 10% by weight, more preferably less than 5% by weight, of passive (or "inert") thermoplastic resin.

The ink also contains less than 5% by weight of water and volatile organic solvents in total, and more preferably less than 3%. Some water will typically be absorbed by the ink from the air and solvents may be present as impurities in the components of the inks, but such low levels are tolerated. The essential absence of water and volatile organic solvents means that the ink does not need to be dried to remove the water/solvent. It also avoids organic solvents which are unsuitable for food packaging applications. However, water and volatile organic solvents have a significant viscosity-lowering effect making formulation of the ink in the absence of such components significantly more challenging.

The coloured inks comprise at least one colouring agent. The colouring agent may be either dissolved or dispersed in the liquid medium of the ink. Preferably the colouring agent is a dispersible pigment, of the types known in the art and commercially available such as under the trade-names Paliotol (available from BASF plc), Cinquasia, Irgalite (both available from Ciba Speciality Chemicals) and Hostaperm (available from Clariant UK). The pigment may be of any desired colour such as, for example, Pigment Yellow 13, Pigment Yellow 83, Pigment Red 9, Pigment Red 184, Pigment Blue 15:3, Pigment Green 7, Pigment Violet 19, Pigment Black 7. Especially useful are black and the colours required for trichromatic process printing. Mixtures of pigments may be used.

In one aspect the following pigments are preferred. Cyan: phthalocyanine pigments such as Phthalocyanine blue 15.4. Yellow: azo pigments such as Pigment yellow 120, Pigment yellow 151 and Pigment yellow 155. Magenta: quinacridone pigments, such as Pigment violet 19 or mixed crystal quinacridones such as Cromophtal Jet magenta 2BC and Cinquasia RT-355D. Black: carbon black pigments such as Pigment black 7.

Pigment particles dispersed in the ink should be sufficiently small to allow the ink to pass through an inkjet nozzle, typically having a particle size less than 8 µm, preferably less than 5 µm, more preferably less than 1 µm and particularly preferably less than 0.5 µm.

The colorant is preferably present in an amount of 20% by weight or less, preferably 10% by weight or less, more preferably 8% by weight or less and most preferably 2 to 5% by weight. A higher concentration of pigment may be required for white inks, however, for example up to and including 30% by weight, or 25% by weight.

The inks may be in the form of an ink set comprising a cyan ink, a magenta ink, a yellow ink and a black ink (a so-called trichromatic set). The inks in a trichromatic set can be used to produce a wide range of colours and tones. Other inkjet ink sets may also be used, such as CMYK+white.

The inkjet ink exhibits a desirable low viscosity (30 mPas or less). In one embodiment, the ink has a viscosity of 15 mPas or less at 25°C and is described as being ultra-low viscosity. Such low viscosities are typically difficult to achieve when formulating inks that are free of water and volatile organic solvents. Such low viscosities are achieved in the present invention owing to the combination of the α,β-unsaturated ether monomer and the low-viscosity difunctional (meth)acrylate monomer, which both have low viscosities.

The inkjet ink contains components that are low viscosity, low odour and have low migration properties. Therefore, the inkjet ink is particularly suitable for inkjet printing onto food packaging that complies with national, European and global regulations. Further, the inkjet ink is particularly suitable for inkjet printing using high resolution and high speed printheads that require low viscosity and ultra-low viscosity inkjet inks.

The ink may cure by free-radical polymerisation, cationic polymerisation or a combination (hybrid) of the two. Preferably it cures by free-radical polymerisation.

To achieve the cure, the ink includes one or more photoinitiators, a free-radical and/or a cationic photoinitiator, as appropriate.

The free-radical photoinitiator can be selected from any of those known in the art. For example, benzophenone, 1-hydroxycyclohexyl phenyl ketone, 1-[4-(2-hydroxyethoxy)-phenyl]-2-hydroxy-2-methyl-1-propane-1-one, 2-benzyl-2-dimethylamino-(4-morpholinophenyl)butan-1-one, isopropyl thioxanthone, benzil dimethylketal, bis(2,6-dimethylbenzoyl)-2,4,4-trimethylpentylphosphine oxide or mixtures thereof. Such photoinitiators are known and commercially available such as, for example, under the trade names Irgacure and Darocur (from Ciba) and Lucerin (from BASF).

In a preferred embodiment of the invention, the free-radical photoinitiator is a photoinitiator package comprising two or more free-radical photoinitiators. Preferably, the photoinitiator package comprises a phosphine oxide type photoinitiator and a hydroxy ketone type photoinitiator. More preferably, the photoinitiator package comprises a blend of a bis acyl phosphine oxide photoinitiator and an alpha hydroxy ketone photoinitiator. Most preferred photoinitiator package comprises a bis acyl phosphine oxide, a monofunctional alpha hydroxy ketone and a difunctional alpha hydroxy ketone.

In the case of a cationically curable system, any suitable cationic initiator can be used, for example sulfonium or iodonium based systems. Non limiting examples include: Rhodorsil PI 2074 from Rhodia; MC AA, MC BB, MC CC, MC CC PF, MC SD from Siber Hegner; UV9380c from Alfa Chemicals; Uvacure 1590 from UCB Chemicals; and Esacure 1064 from Lamberti spa.

Preferably the photoinitiator is present in an amount of 1 to 20% by weight, preferably 5 to 15% by weight based on the total weight of the ink. In a preferred embodiment, the photoinitiator package comprises bis acyl phosphine oxide, a monofunctional alpha hydroxy ketone and a difunctional alpha hydroxy ketone in a ratio of 3 to 6 parts by weight bis acyl phosphine oxide : 2 to 4 parts by weight monofunctional alpha hydroxy ketone : 1 to 6 parts by weight difunctional alpha hydroxy ketone.

The amounts by weight provided herein are based on the total weight of the ink, unless context indicates otherwise.

Other components of types known in the art may be present in the ink to improve the properties or performance. These components may be, for example, surfactants, defoamers, dispersants, synergists for the photoinitiator, stabilisers against deterioration by heat or light, reodorants, flow or slip aids, biocides and identifying tracers.

The ink may be prepared by known methods such as stirring with a high-speed water-cooled stirrer, or milling on a horizontal bead-mill.

The printing is performed by inkjet printing, e.g. on a single-pass inkjet printer, for example for printing (directly) onto packaging, such as food packaging. The inks are exposed to actinic (often UV) radiation to cure the ink. The exposure to actinic radiation may be performed in an inert atmosphere, using a gas such as nitrogen, in order to assist curing of the ink
Accordingly, the present invention further provides a method of inkjet printing comprising inkjet printing the inkjet ink as defined herein onto a substrate and curing the ink.

The present invention also provides a cartridge containing the inkjet ink as defined herein. It also provides a printed substrate having the ink as defined herein printed thereon. Suitable substrates are food packaging. Food packaging is typically formed of flexible and rigid plastics (e.g. food-grade polystyrene and PE/PP/PET films), paper and board (e.g. corrugated board). Food packaging includes materials that come into direct contact with food (e.g. containers) and those that come into indirect contact with food (e.g. labels).

Any of the sources of actinic radiation discussed herein may be used for the irradiation of the inkjet ink. A suitable dose would be greater than 200 mJ/cm², more preferably at least 300 mJ/cm² and most preferably at least 500 mJ/cm². The upper limit is less relevant and will be limited only by the commercial factor that more powerful radiation sources increase cost. A typical upper limit would be 5 J/cm². Further details of the printing and curing process are provided in WO 2012/110815.

The invention will now be described with reference to the following examples, which are not intended to be limiting.

### Examples

### Example 1

An ink, as detailed in Table 1, was prepared by mixing the components in the given amounts. Amounts are given as weight percentages based on the total weight of the ink.

**Table 1**

| **Component** | **Function** | **Weight%** |
|---|---|---|
| 3,6,9,12-Tetraoxatetradeca-1,13-diene | α,β-Unsaturated ether monomer | 24.0 |
| 3-Methyl-1,5-pentanediol diacrylate | Difunctional acrylate monomer | 54.5 |
| Modified polyester acrylate | UV curable oligomer | 3.0 |
| 10-24% Solution of 2,6-bis(1,1-dimethylethyl)-4-(phenylenemethylene)cyclohexa-2,5-dien-1-one in poly[oxy(methyl-1,2-ethanediyl)],alpha,alpha,alpha-1,2,3-propanetriyltris[omega-[1-oxo-2-propen-1-yl]oxy]- | Stabiliser | 0.5 |
| 2-Hydroxy-1-[4-(2-hydroxyethoxy)phenyl]-2-methyl-1-propanone | Free-radical photoinitiator | 3.0 |
| 2-Hydroxy-1-[4-(4-(2-hydroxy-2-methylpropionyl)phenoxy)phenyl]-2-methylpropan-1-one | Free-radical ph otoin itiator | 5.0 |
| Phenyl bis(2,4,6-trimethylbenzoyl)-phosphine oxide | Free-radical photoinitiator | 5.0 |
| Copper phthalocyanine pigment | Blue pigment | 2.4 |
| Polyether-modified polydimethylsiloxane | Surfactant | 1.0 |
| DISPERBYK 168 | Block copolymer pigment dispersant | 1.6 |
| | Total | 100.00 |

3,6,9,12-Tetraoxatetradeca-1,13-diene has a viscosity of 3.66 mPas at 25°C and MPDDA has a viscosity of 5.64 mPas at 25°C. 3,6,9,12-Tetraoxatetradeca-1,13-diene has a boiling point of 252.9°C at 1.013 hPa and a low odour and MPDDA has a boiling point of more than 180°C at 1.013 hPa and a low odour.

The viscosity of the ink was measured using a Brookfield viscometer fitted with a thermostatically controlled cup and spindle arrangement, here a DV1 low-viscosity viscometer. The viscosity of the ink was measured as 12.1 mPas at 25°C.

The ink has a low odour. The ink has a lower odour than conventional radiation-curable inkjet inks containing typical monomers such as NVC and PEA.

The ink is suitable for indirect food packaging, such as labels. The test for the suitability for food packaging in terms of low migration is as follows. The ink is printed and cured onto a plastic substrate and tested for specific migration according to EU 10/2011 using food simulants. The ink is suitable for such use.

### Example 2

An ink, as detailed in Table 2, was prepared by mixing the components in the given amounts. Amounts are given as weight percentages based on the total weight of the ink.

**Table 2**

| **Component** | **Function** | **Weight%** |
|---|---|---|
| 3,6,9,12-Tetraoxatetradeca-1,13-diene | α,β-Unsaturated ether monomer | 15.6 |
| 3-Methyl-1,5-pentanediol diacrylate | Difunctional acrylate monomer | 22.5 |
| Propylidynetrimethanol, ethoxylated, esters with acrylic acid | Trifunctional acrylate monomer | 47.1 |
| 10-24% Solution of 2,6-bis(1,1-dimethylethyl)-4-(phenylenemethylene)cyclohexa-2,5-dien-1-one in poly[oxy(methyl-1,2-ethanediyl)],alpha,alpha,alpha-1,2,3-propanetriyltris[omega-[1-oxo-2-propen-1-yl]oxy]- | Stabiliser | 0.5 |
| 2-Hydroxy-1-[4-(2-hydroxyethoxy)phenyl]-2-methyl-1-propanone | Free-radical photoinitiator | 3.0 |
| 2-Hydroxy-1-[4-(4-(2-hydroxy-2-methylpropionyl)phenoxy)phenyl]-2-methylpropan-1-one | Free-radical photoinitiator | 2.0 |
| Phenyl bis(2,4,6-trimethylbenzoyl)-phosphine oxide | Free-radical photoinitiator | 4.0 |
| Copper phthalocyanine pigment | Blue pigment | 2.6 |
| Polyether-modified polydimethylsiloxane | Surfactant | 1.0 |
| DISPERBYK 168 | Block copolymer pigment dispersant | 1.7 |
| | Total | 100.00 |

The viscosity of the ink was measured using a Brookfield viscometer fitted with a thermostatically controlled cup and spindle arrangement, here a DV1 low-viscosity viscometer. The viscosity of the ink was measured as 25.3 mPas at 25°C.

The ink has a low odour. The ink has a lower odour than conventional radiation-curable inkjet inks containing typical monomers such as NVC and PEA.

The ink is suitable for direct food packaging, such as containers. The test for the suitability for food packaging in terms of low migration is as follows. The ink is printed and cured onto a plastic substrate and tested for specific migration according to EU 10/2011 using food simulants. The ink is suitable for such use.

## Claims

1. An inkjet ink comprising:
an α,β-unsaturated ether monomer in which the only radiation-curable functional groups present in the monomer are α,β-unsaturated ether groups;
a low-viscosity difunctional (meth)acrylate monomer in which the only radiation-curable functional groups present in the monomer are acrylate groups, wherein the low-viscosity difunctional (meth)acrylate monomer has a viscosity of 0.5 to 6.5 mPas at 25°C; and
a colouring agent;
wherein the ink contains less than 5% by weight of water and volatile organic solvents in total, and less than 3.0% by weight of mono- and difunctional monomers in total, other than the α,β-unsaturated ether monomer and the low-viscosity difunctional (meth)acrylate monomer, where the amounts by weight are based on the total weight of the ink, and
wherein the ink has a viscosity of less than 30 mPas at 25°C.

2. An inkjet ink as claimed in claim 1, wherein the α,β-unsaturated ether monomer has a functionality of 1 to 6.

3. An inkjet ink as claimed in claims 1 or 2, wherein the α,β-unsaturated ether monomer has a functionality of 2 to 4.

4. An inkjet ink as claimed in any preceding claim, wherein the α,β-unsaturated ether monomer has a viscosity of 0.5 to 6.5 mPas at 25°C.

5. An inkjet ink as claimed in any preceding claim, wherein the α,β-unsaturated ether monomer has a boiling point of 200 to 300°C at 1.013 hPa.

6. An inkjet ink as claimed in any preceding claim, wherein the α,β-unsaturated ether monomer is present at 10-50% by weight.

7. An inkjet ink as claimed in any preceding claim, wherein the low-viscosity difunctional (meth)acrylate monomer has a boiling point of more than 150°C at 1.013 hPa.

8. An inkjet ink as claimed in any preceding claim, wherein the low-viscosity difunctional (meth)acrylate monomer is present at 10-70% by weight.

9. A cartridge containing the inkjet ink as claimed in any preceding claim.

10. A printed substrate having the ink as claimed in any of claims 1-8 printed thereon.

11. A printed substrate as claimed in claim 10, wherein the substrate is a food packaging.

12. A method of inkjet printing comprising inkjet printing the inkjet ink as claimed in any of claims 1-8 onto a substrate and curing the ink.

13. A method as claimed in claim 12, wherein the substrate is a food packaging.

## Patentansprüche

1. Tintenstrahltinte, umfassend:
ein α,β-ungesättigtes Ethermonomer, bei dem die einzigen strahlungshärtbaren in dem Monomer vorliegenden funktionellen Gruppen α,β-ungesättigte Ethergruppen sind;
ein difunktionelles (Meth)acrylatmonomer mit niedriger Viskosität, bei dem die einzigen strahlungshärtbaren in dem Monomer vorliegenden funktionellen Gruppen Acrylatgruppen sind, wobei das difunktionelle (Meth)acrylatmonomer mit niedriger Viskosität eine Viskosität von 0,5 bis 6,5 mPas bei 25 °C aufweist; und
ein Färbemittel;
wobei die Tinte abgesehen von dem α,β-ungesättigten Ethermonomer und dem difunktionellen (Meth)acrylatmonomer mit niedriger Viskosität weniger als 5 Gewichts-% Wasser und flüchtige organische Lösungsmittel insgesamt und weniger als 3,0 Gewichts-% mono- und difunktionelle Monomere insgesamt enthält, wobei die Gewichtsmengen auf dem Gesamtgewicht der Tinte basieren und wobei die Tinte eine Viskosität von weniger als 30 mPas bei 25 °C aufweist.

2. Tintenstrahltinte nach Anspruch 1, wobei das α,β-ungesättigte Ethermonomer eine Funktionalität von 1 bis 6 aufweist.

3. Tintenstrahltinte nach einem der Ansprüche 1 oder 2, wobei das α,β-ungesättigte Ethermonomer eine Funktionalität von 2 bis 4 aufweist.

4. Tintenstrahltinte nach einem vorhergehenden Anspruch, wobei das α,β-ungesättigte Ethermonomer eine Viskosität von 0,5 bis 6,5 mPas bei 25 °C aufweist.

5. Tintenstrahltinte nach einem vorhergehenden Anspruch, wobei das α,β-ungesättigte Ethermonomer einen Siedepunkt von 200 bis 300 °C bei 1,013 hPa aufweist.

6. Tintenstrahltinte nach einem vorhergehenden Anspruch, wobei das α,β-ungesättigte Ethermonomer mit 10-50 Gewichts-% vorliegt.

7. Tintenstrahltinte nach einem vorhergehenden Anspruch, wobei das difunktionelle (Meth)acrylatmonomer mit niedriger Viskosität einen Siedepunkt von mehr als 150 °C bei 1,013 hPa aufweist.

8. Tintenstrahltinte nach einem vorhergehenden Anspruch, wobei das difunktionelle (Meth)acrylatmonomer mit niedriger Viskosität mit 10-70 Gewichts-% vorliegt.

9. Patrone, die die Tintenstrahltinte nach einem vorhergehenden Anspruch enthält.

10. Bedrucktes Substrat, das die Tinte nach einem der Ansprüche 1-8 darauf bedruckt aufweist.

11. Bedrucktes Substrat nach Anspruch 10, wobei das Substrat eine Lebensmittelverpackung ist.

12. Verfahren zum Tintenstrahldrucken, umfassend das Tintenstrahldrucken der Tintenstrahltinte nach einem der Ansprüche 1-8 auf ein Substrat und das Härten der Tinte.

13. Verfahren nach Anspruch 12, wobei das Substrat eine Lebensmittelverpackung ist.

## Revendications

1. Encre pour jet d'encre comprenant :
un monomère d'éther α,β insaturé dans lequel les seuls groupes fonctionnels polymérisables par rayonnement présents dans le monomère sont les groupes éther α,β insaturé ;
un monomère de (méth)acrylate difonctionnel de viscosité faible dans lequel les seuls groupes fonctionnels polymérisables par rayonnement présents dans le monomère sont des groupes acrylate, dans lesquels le monomère de (méth)acrylate difonctionnel de viscosité faible a une viscosité de 0,5 à 6,5 mPas à 25 °C ;
et un agent colorant ;
dans lequel l'encre contient moins de 5 % en poids d'eau et de solvants organiques volatils au total, et moins de 3,0 % en poids de monomères mono fonctionnels et difonctionnels au total, autres que le monomère d'éther α,β insaturé et le monomère de (méth)acrylate difonctionnel de viscosité faible, les quantités en poids étant basées sur le poids total de l'encre, et l'encre présentant une viscosité inférieure à 30 mPas à 25 °C.

2. Encre pour jet d'encre selon la revendication 1, dans laquelle le monomère d'éther α,β insaturé a une fonctionnalité de 1 à 6.

3. Encre pour jet d'encre selon la revendication 1 ou 2, dans laquelle le monomère d'éther α,β insaturé a une fonctionnalité de 2 à 4.

4. Encre pour jet d'encre selon l'une quelconque des revendications précédentes, dans laquelle le monomère d'éther α,β insaturé a une viscosité de 0,5 à 6,5 mPas à 25 °C.

5. Encre pour jet d'encre selon l'une quelconque des revendications précédentes, dans laquelle le monomère d'éther α,β insaturé a un point d'ébullition de 200 à 300 °C à 1,013 hPa.

6. Encre pour jet d'encre selon l'une quelconque des revendications précédentes, dans laquelle le monomère d'éther α,β insaturé est présent à 10-50 % en poids.

7. Encre pour jet d'encre selon l'une quelconque des revendications précédentes, dans laquelle le monomère de (méth)acrylate difonctionnel de viscosité faible a un point d'ébullition de plus de 150 °C à 1,013 hPa.

8. Encre pour jet d'encre selon l'une quelconque des revendications précédentes, dans laquelle le monomère de (méth)acrylate difonctionnel de viscosité faible est présent à 10-70 % en poids.

9. Cartouche contenant l'encre pour jet d'encre selon l'une quelconque des revendications précédentes.

10. Support imprimé sur lequel est imprimée l'encre selon l'une quelconque des revendications 1 à 8.

11. Support imprimé selon la revendication 10, le support étant un emballage alimentaire.

12. Procédé d'impression à jet d'encre comprenant l'impression par jet d'encre de l'encre pour jet d'encre selon l'une quelconque des revendications 1 à 8 sur un support et la polymérisation de l'encre.

13. Procédé selon la revendication 12, le support étant un emballage alimentaire.
